(19) Europäisches Patentamt
European Patent Office
Office européen des brevets

(11) **EP 2 075 138 B1**

(12) **EUROPEAN PATENT SPECIFICATION**

(45) Date of publication and mention
of the grant of the patent:
**11.12.2013 Bulletin 2013/50**

(51) Int Cl.:
**B41M 5/00** (2006.01)   **B41J 2/01** (2006.01)
**B41M 5/50** (2006.01)   **B41M 5/52** (2006.01)
**C09D 5/02** (2006.01)   **C09D 11/00** (2006.01)
**C09D 155/00** (2006.01)   **C09D 183/10** (2006.01)

(21) Application number: **07828939.4**

(22) Date of filing: **01.10.2007**

(86) International application number:
**PCT/JP2007/069199**

(87) International publication number:
**WO 2008/047592 (24.04.2008 Gazette 2008/17)**

(54) **AQUEOUS COATING AGENT**

WÄSSRIGES BESCHICHTUNGSMITTEL

AGENT DE REVÊTEMENT AQUEUX

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **05.10.2006 JP 2006273975**

(43) Date of publication of application:
**01.07.2009 Bulletin 2009/27**

(73) Proprietor: **Toagosei Co., Ltd
Minato-ku, Tokyo 105-8419 (JP)**

(72) Inventors:
• **KANBE, Shinya**
**Nagoya-shi**
**Aichi 4550027 (JP)**
• **MAKI, Takayuki**
**Nagoya-shi**
**Aichi 4550027 (JP)**
• **ASAI, Yousuke**
**Nagoya-shi**
**Aichi 4550027 (JP)**
• **MATSUNAGA, Morikatsu**
**Nagoya-shi**
**Aichi 4550027 (JP)**
• **MORI, Yoshio**
**Nagoya-shi**
**Aichi 4550027 (JP)**

(74) Representative: **TBK
Bavariaring 4-6
80336 München (DE)**

(56) References cited:
EP-A2- 0 783 023        WO-A1-97/31984
JP-A- 11 227 325        JP-A- 11 227 325
JP-A- 2000 301 825      JP-A- 2001 098 206
JP-A- 2001 187 852      JP-A- 2001 342 388
JP-A- 2004 050 751      JP-A- 2005 238 829
US-A- 5 869 564         US-A1- 2002 077 383
US-A1- 2003 212 198

Remarks:
The file contains technical information submitted after
the application was filed and not included in this
specification

**Description**

[FIELD OF THE INVENTION]

The present invention relates to an aqueous coating agent excellent in scratch resistance, water resistance, gloss imparting effect and ink ejectability, and to an aqueous coating solution containing this aqueous coating agent.

[PRIOR ART]

The ink-jet (recording) system is a recording system wherein ink is ejected from a fine nozzle and is adhered to the surface of a recording medium thereby printing letters and images. The ink for ink-jet system is divided roughly into a dye ink and a pigment ink. In recent years, a pigment ink excellent in weather resistance and water resistance for recorded materials such as printed materials comes to be widely used.

However, when the pigment ink is used, there may be a problem that since a pigment remains on the recorded surface, a recorded material is inferior in scratch resistance and gloss. This problem becomes significant particularly when a recording medium having an ink-receiving layer on the surface thereof is printed with a pigment ink, because a large amount of a pigment remains on the surface.

To solve these problems, a method for covering the surface of an ink-jet recorded material with a protective layer has been proposed. As the method for forming a protective layer, a film lamination method including lamination with a transparent film (See Patent Document 1), a liquid lamination method including formation of a film on the surface of a recorded material by applying a resin solution (See Patent Documents 2 and 3) and the like have been proposed. However, these methods have a problem that a high-cost  laminator is necessary.

To solve this problem, a method wherein an image is formed on a recording medium by an ink-jet recording system, and then a coating solution is ejected in the same ink-jet recording system to form a topcoat layer on the surface of the image has been proposed in recent years (See Patent Documents 4 and 5). However, the coating solution shown in these documents is inferior in scratch resistance because it does not contain a component showing an activity such as a silicone, and is also inferior in ink ejectability because an emulsion resin is used.

As used herein, the ink ejectability refers to the quality by which the ejection rate and ejection direction of a liquid to be ejected in the ink-jet system are stable over a long period to prevent problems such as nozzle clogging.

As a method other than surface coverage, a method which comprises adding a silicone polymer showing lubricating property, as an additive in a pigment ink, has been proposed (See Patent Document 6). However, the silicone polymer used in Patent Document 6 has a high molecular weight and thus has a problem that when the additive is added in a sufficient amount to enable conferment of sufficient scratch resistance, the pigment dispersion is deteriorated to undergo aggregation, or the pigment ink is thickened to deteriorate ink ejectability.

[Patent Document 1] JP-A H9-70960 (claims)
[Patent Document 2] JP-A H9-48180 (claims)
[Patent Document 3] JP-A H9-262971 (claims)
[Patent Document 4] JP-A 2001-39006 (claims)
[Patent Document 5] JP-A 2004-50751 (claims)
[Patent Document 6] JP-A 2000-506198 (claims)

[DISCLOSURE OF THE INVENTION]

[PROBLEMS THAT THE INVENTION IS TO SOLVE]

The present invention is completed in view of the above-mentioned related art and provides an aqueous coating agent which is applied onto a recording medium using the ink-jet system to form a film excellent in scratch resistance, water resistance and gloss on the surface of an image, and an aqueous coating solution containing this aqueous coating agent.

[MEANS FOR SOLVING THE PROBLEMS]

The inventors made extensive study for solving the problem, and found that the problem can be solved by an aqueous coating agent containing a specific graft copolymer having a silicone-based side chain to complete the present invention.

The primary first invention of the present invention is an aqueous coating agent for pigment ink-jet which is characterized in that the aqueous coating agent which is applied onto a recording medium by an ink-jet system comprises a graft copolymer that has a silicone-based side chain, and an ethylenically unsaturated carboxylic acid-containing monomer as an essential constituent in a main chain, and has an acid value in the range from 40 to 200 mg-KOH/g (solid) and a weight-average molecular weight in the range from 5,000 to 30,000.

Additionally, the primary second invention is an aqueous coating solution for pigment ink-jet which is characterized in that it comprises the above-mentioned aqueous coating agent, is charged into a tank different from a tank for pigment ink, and is ejected and applied onto a recorded material from a nozzle different from a nozzle for pigment ink in the ink-jet system.

It is noted that (meth)acrylic acid means acrylic acid or methacrylic acid, and (meth)acrylate means acrylate or methacrylate.

[EFFECT OF THE INVENTION]

When the aqueous coating agent of the present invention is used in a pigment ink, a pigment ink recorded material having scratch resistance, water resistance and gloss can be obtained in the ink-jet system. Additionally, the coating agent of the present invention has high ink ejectability, and when it is used as an additive agent, ink ejection is stably performed over a long period of time. Further, the coating agent of the present invention can also be used as an aqueous coating solution without being mixed with a pigment ink.

[DESCRIPTION OF THE PREFERRED EMBODIMENTS]

1. Aqueous Coating Agent

The aqueous coating agent of the present invention contains, as an essential constituent, a graft copolymer described in detail below.

1.1 Graft Copolymer

The graft copolymer is one having a silicone-based side chain, an ethylenically unsaturated carboxylic acid-containing monomer as an essential constituent in a main chain, and if desired, a copolymerizable monomer as other constituent, and having an acid value in the range from 40 to 200 mg-KOH/g (solid) and a weight-average molecular weight in the range from 5,000 to 30,000.

[1] Silicon-based Side Chain

Examples of the constituent unit of the silicon-based side chain constituting the graft copolymer include an alkyl-modified siloxane, an alkyleneoxide-modified siloxane, a phenyl-modified siloxane and the like in addition to dimethyl siloxane. From the viewpoint of lubricating property imparting effect and chemical stability, a silicone-based side chain of dimethyl siloxane unit is preferable.

Examples of the method for introducing a silicone-based side chain into a graft copolymer include a method of using a radical-polymerizable silicone macromonomer, a method of introducing a silicone-based side chain by polymer reaction and the like. Among these, the method of using a silicone macromonomer is useful in respect of easiness in production process, economic efficiency and the like.

The silicone macromonomer is not particularly limited. For example, the silicone macromonomer can be produced by a method which comprises subjecting cyclic siloxane to anionic polymerization with a lithium trialkyl silanolate as an initiator to yield a living polymer and then reacting the polymer with γ-methacryloxypropyldimethyl monochlorosilane (disclosed in JP-A S59-78236), by a method of condensing a terminal silanol group-containing silicone with an organic silicon compound such as γ-methacryloxypropyldimethyl monochlorosilane (disclosed in JP-A S60-123518), and the like.

The above-mentioned silicone macromonomer is particularly preferably one having (meth)acrylate introduced into one end thereof. From the viewpoint of chemical stability, the silicone macromonomer having (meth)acrylate at one end preferably has an alkyl silyl terminal at the other end at which the presence of an active substituent such as a hydroxy group, an epoxy group, an amino group, and an alkoxy group is not desirable. Examples of marketed product include "AK-5", "AK-30" and "AK-32" (trade name) manufactured by TOAGOSEI CO., Ltd., "X-22-174DX", "X-24-8201" and "X-22-2426" (trade name) manufactured by Shin-Etsu Chemical Co., Ltd., and the like.

The above-mentioned silicone macromonomer may be used singly or in combination of two or more types thereof.

Examples of the method of introducing a silicone-based side chain by polymer reaction include a method of using a reactive silicone such as an epoxy silicone, a silanol silicone and an aminosilicone. Specifically, there are a method of reacting a carboxylic acid introduced into the main chain and a silicone modified with epoxy at one end thereof, a method of reacting an epoxy group introduced into the main chain and a silicone modified with amino group at one end thereof, and the like.

The molecular weight of the silicone-based side chain, in terms of weight-average molecular weight by gel permeation chromatography with polystyrene as standard substance, is preferably in the range from 3,000 to 20,000, and more preferably from 3,000 to  15,000. The polymer having a silicone-based side chain with a weight-average molecular weight of lower than 3,000 fails to obtain sufficient scratch resistance, while the polymer having a silicone-based side chain with a weight-average molecular weight of higher than 20,000 is inferior in ink ejectability.

[2] Main Chain

The main chain constituting the graft copolymer comprises an ethylenically unsaturated carboxylic acid-containing monomer as an essential constituent, and if desired, a copolymerizable monomer as other constituent, and is obtained by copolymerizing these monomers.

Examples of the ethylenically unsaturated carboxylic acid-containing monomer include (meth)acrylic acid, ethacrylic acid, propylacrylic acid, isopropylacrylic acid, crotonic acid, itaconic acid, fumaric acid, citraconic acid, maleic anhydride and the like. Among these, (meth)acrylic acid are preferred.

The amount of the ethylenically unsaturated carboxylic acid-containing monomer introduced is established such that the graft copolymer has an acid value in the range from 40 to 200 mg-KOH/g (solid). And it is preferable that the acid value thereof is set to the range from 60 to 150 mg-KOH/g. The copolymer having an acid value of lower than 40 mg-KOH/g does not attain sufficient water solubility. When the acid value is higher than 200 mg-KOH/g, a coating film becomes insufficient in water resistance.

Other monomer described below can be contained as a desired constituent for the main chain, in such a range that the function of the graft copolymer of the present invention is not impaired.

Examples of the other monomer include a vinyl aromatic monomer, a sulfonic acid-containing monomer, an alkyl (meth) acrylate, an alicyclic (meth)acrylate, a hydroxyalkyl (meth)acrylate, (meth)acrylamide, vinyl acetate, N-vinyl pyrrolidone, (meth)acrylonitrile, (meth)acrylic acid and the like. The other monomer may include a crosslinkable monomer such as methylene  bisacrylamide, methylene bismethacrylamide, butanediol di(meth)acrylate, ethyleneglycol di(meth)acrylate, polyethyleneglycol di(meth)acrylate, polypropyleneglycol di(meth)acrylate, trimethylolpropane tri(meth)acrylate, di (meth)acryloxyethyl phosphate, triallyl cyanurate, triallyl isocyanurate, divinyl benzene, diallyl maleate and polyallylsaccharose that have two or more vinyl groups in its molecule, and the like.

Examples of the above-mentioned vinyl aromatic monomer include a styrene-based monomer such as styrene, $\alpha$-methyl styrene, o-methyl strylene, m-methyl styrene, p-methyl styrene, p-tert-butyl styrene and vinyl toluene; a phenyl group-containing (meth)acrylate such as benzyl (meth)acrylate, phenyl (meth)acrylate, 2-hydroxy-3-phenoxypropyl (meth)acrylate, phenoxyethyl (meth)acrylate, phenoxypolyethylene (meth)acrylate, glycol (meth)acrylate and the like.

Examples of the above-mentioned sulfonic acid-containing monomer include ethyl sulfate (meth)acrylate, styrene sulfonic acid, 2-acrylamide-2-methylpropane sulfonic acid, vinyl sulfonic acid, (meth)allyl sulfonic acid and the like.

Examples of the above-mentioned alkyl (meth)acrylate include methyl (meth)acrylate, ethyl (meth)acrylate, propyl (meth)acrylate, butyl (meth)acrylate, 2-ethylhexyl (meth)acrylate and the like.

Examples of the above-mentioned alicyclic (meth)acrylate include cyclopentyl (meth)acrylate, cyclohexyl (meth) acrylate, cyclooctyl (meth)acrylate, cyclononyl (meth)acrylate, isobornyl (meth)acrylate, norbornyl (meth)acrylate, dicyclopentanyl (meth)acrylate, dicyclopentenyl (meth)acrylate, dicyclopentenyloxyalkyl (meth)acrylate, adamantyl (meth) acrylate and the like.

Examples of the above-mentioned hydroxyalkyl (meth)acrylate include 2-ethylhexyl (meth)acrylate, 3-hydroxypropyl (meth)acrylate, polyalkylene glycol (meth)acrylate (n=2-30), polycaprolactone (meth)acrylate and the like. The amount of the hydroxyalkyl acrylate introduced is established such that the graft copolymer has a hydroxyl value of not higher than 30 mg-KOH/g. And it is preferable that the hydroxyl value thereof is set to 10 mg-KOH/g or less. When the hydroxyl value of the graft copolymer is higher than 30 mg-KOH/g, the viscosity of a solution containing the graft copolymer becomes high, thus deteriorating ink ejectability.

The designed glass transition temperature (Tg) of the main chain composed of the above-mentioned monomers, as determined from the equation (1) below, is preferably in the range from 10°C to 100°C, more preferably from 20°C to 80°C, and particularly from 50°C to 80°C. If the glass transition temperature of the main chain is lower than 10°C, a film formed from a coating agent containing the graft copolymer cannot provide sufficient scratch resistance. If the glass transition temperature is higher than 100°C, it becomes difficult to form a film at room temperature.

$$1/Tg \ = \ (w_1/Tg_1 + w_2/Tg_2 + \ ... \ + w_n/Tg_n) \qquad\qquad (1)$$

wherein:

1, 2 ... n denote types of constituent monomers;
$Tg_n$ denotes glass transition temperature (K) of a homopolymer of monomer n;
$w_n$ denotes the weight ratio of monomer n in the constitution; and
Tg denotes glass transition temperature (K).

[3] Graft Copolymer

The coating agent of the present invention contains the above-mentioned graft copolymer consisting of [1] silicone-based side chain and [2] main chain, each of which has the constitution described above as an essential component, but may contain a side chain-free linear copolymer.

The above-mentioned side chain-free linear copolymer is a copolymer consisting of monomers having the same constitution as that of the monomers constituting [2] Main Chain for the graft copolymer from the viewpoint of preventing deterioration of ink-jet quality and deterioration of the performance of a coating film, and an acid value, glass transition temperature (Tg) and the like are in accordance with the above "[2] Main Chain".

A macromonomer method, an ion polymerization method, and introduction of a side chain by polymer reaction are known as the method for synthesizing a graft copolymer. The macromonomer method capable of easily introducing an ionic functional group into the end of a side chain, easily regulating the degrees of polymerization of main and side chains, and easily linking a side chain with the main chain, is best suited to synthesis of the graft copolymer of the present invention.

Specifically, the graft copolymer of the present invention can be obtained for example by copolymerizing a silicone macromonomer constituting a side chain, with an ethylenically unsaturated carboxylic acid-containing monomer constituting the main chain, and if desired, with other monomer.

The carboxylic acids in the copolymer should be ionized by neutralizing them partially or wholly with a base. Examples of the base for neutralization include an inorganic alkali such as an alkali metal hydroxide including potassium hydroxide, sodium hydroxide and the like, and an organic amine including diethanolamine, triethanolamine and the like. The alkali metal hydroxide is preferable from the viewpoint of ink-jet quality.

In synthesis of the graft copolymer, the weight percentage of the segment (for example, the silicone macromonomer) constituting the graft side chain is preferably in the range from 10% to 80% by weight; in other words, the total weight of the monomers constituting the main chain is in the range from 90% to 20% by weight. The weight percentage of the segment constituting the graft side chain is more preferably in the range from 15% to 50% by weight; in other words, the total weight of the monomers constituting the main chain is in the range from 85% to 50% by weight. And the weight percentage of the segment constituting the graft side chain is particularly in the range from 20% to 40% by weight; in other words, the total weight of the monomers constituting the main chain is in the range from 80% to 60% by weight. If the weight percentage of the graft side chain is lower than 10% by weight, no lubricating property can be conferred due to shortage of the silicone component, and thus sufficient scratch resistance cannot be obtained. And if the weight percentage of the graft side chain is higher than 80% by weight, the ability of the graft copolymer to form a coating film is deteriorated due to shortage of the component constituting the main chain, and thus scratch resistance is deteriorated.

The method for synthesizing the graft copolymer is preferably a method of using a radical polymerization initiator because the polymerization operation and the molecular weight can be easily regulated. Additionally, a solution polymerization method in which polymerization is carried out in an organic solvent is preferable because hydrophobic monomers are hardly dissolved.
Examples of a preferable solvent for radical polymerization in the solution polymerization method include a ketone-based solvent such as acetone, methyl ethyl ketone and methyl isobutyl ketone; an acetate-based solvent such as ethyl acetate and butyl acetate; an aromatic hydrocarbon-based solvent such as benzene, toluene and xylene; butanol, isopropanol, ethanol, methanol, cyclohexane, tetrahydrofuran, dimethylformamide, dimethylsulfoxide, hexamethylphosphoamide and the like. More preferable ones are a ketone-based solvent, an acetate-based solvent and an alcohol-based solvent.

The radical polymerization initiator can be used so long as it is used in general, and specific examples include a peroxy ketal, a hydroperoxide, a dialkyl peroxide, a diacyl peroxide, a peroxy dicarbonate, a peroxy ester, azobisisobutyronitrile and azobis(2-methylbutyronitrile) that are cyano-based, dimethyl-2,2'-azobisisobutyrate that is non-cyano-based, and the like. An organic peroxide and an azo-based compound which can easily regulate molecular weight and whose decomposition temperature is low are preferable. In particular, the azo-based compound is preferred.
The amount of the polymerization initiator to be used is preferably in the range from 0.1% to 15% by weight and more preferably from 0.3% to 10% by weight based on the total weight of the polymerizable monomers.

For the purpose of controlling the molecular weight of the graft copolymer, a chain transfer agent such as mercaptoacetic acid, mercaptopropionic acid, 2-propanethiol, 2-mercaptoethanol, thiophenol, dodecylmercaptan and thioglycerol may be added in a suitable amount to the polymerization system.

The polymerization temperature is preferably in the range from 40°C to 180°C and more preferably from 50°C to 150°C. The polymerization period is preferably in the range from 3 to 25 hours.

The molecular weight of the graft copolymer of the present invention, in terms of weight-average molecular weight by gel permeation chromatography with polystyrene as standard substance, is in the range from 5,000 to 30,000, more preferably from 8,000 to 25,000, and particularly from 10,000 to 20,000. The polymer having a weight-average molecular weight of lower than 5,000 fails to obtain sufficient scratch resistance, while the polymer having a weight-average molecular weight of higher than 30,000 is inferior in ink ejectability.

1.2 Method of Using Aqueous Coating Agent

The aqueous coating agent of the present invention can be ordinarily used together with publicly known pigment inks. The pigment ink used together with the aqueous coating agent of the present invention may be either an aqueous pigment ink or a solvent pigment ink, and both types can be applied without particular limitation, but the aqueous pigment ink is more preferably used together with the aqueous coating agent.

For example, the aqueous coating agent can be used by being added to the aqueous pigment ink. Alternatively, the aqueous coating agent may be charged as an aqueous coating solution into an ink tank different from that for the pigment ink and used by being ejected from a nozzle different from that for the pigment ink. Particularly, the latter is more desired in that a dense film can be formed on the surface of a recorded material.

Hereinafter, an aqueous coating solution not compounded with a pigment ink, and an aqueous pigment ink compounded with the aqueous coating agent, are described.

2. Aqueous Coating Solution

The aqueous coating solution of the present invention contains, as an essential constituent, an aqueous medium in addition to the above-mentioned "1. Aqueous Coating Agent".

2.1 Aqueous Medium

The aqueous medium is preferably a mixed solvent of water and a water-soluble organic solvent from the viewpoint of preventing drying of the aqueous coating solution and of securing the ejection stability thereof. Water is preferably an ion exchanged water (deionized water).

Examples of the water-soluble organic solvent include an alkyl alcohol having 1 to 4 carbon atoms such as methyl alcohol, ethyl alcohol, n-propyl alcohol, isopropyl alcohol, n-butyl alcohol, sec-butyl alcohol and tert-butyl alcohol; an amide such as dimethylformamide and dimethylacetamide; a ketone or ketoalcohol such as acetone and diacetone alcohol; an ether such as tetrahydrofuran and dioxane; a polyalkylene glycol such as polyethylene glycol and polypropylene glycol; an alkylene glycol having an alkylene group containing 2 to 6 carbon atoms such as ethylene glycol, propylene glycol, butylene glycol, triethylene glycol, 1,2-hexane diol, 1,2,6-hexane triol, thiodiglycol, hexyleneglycol and diethylene glycol; a lower alkyl ether of a polyhydric alcohol, such as glycerol, ethylene glycol monomethyl (or ethyl) ethers, diethylene glycol monomethyl (or ethyl) ethers and triethylene glycol monomethyl (or ethyl) ethers; N-methyl-2-pyrrolidone, 2-pyrrolidone, 1,3-dimethyl-2-imidazolidinone, and the like. Among these water-soluble organic solvent, a polyhydric alcohol such as diethylene glycol and a lower alkyl ether of a polyhydric alcohol such as triethylene glycol monomethyl (or ethyl) ethers are preferred.

The water-soluble organic solvent may be used singly or in combination of two or more types thereof depending on necessity.

2.2 Other Components

As other components than the above-mentioned aqueous coating agent and the aqueous medium, a wide variety of known and customarily used additives that can be added to usual aqueous pigment inks can be added to the aqueous coating solution of the present invention.

Examples of such additives include a surfactant, a defoaming agent, an antiseptic agent, an antisettling agent, a chelating agent, a thickener, an anticorrosive, an antioxidant and the like. The surfactant includes an anionic surfactant such as a fatty acid salt, a higher alcohol sulfate, a liquid fatty oil sulfate, and an alkylallyl sulfonate; a nonionic surfactant such as a polyoxyethylene alkyl ether, a polyoxyethylene alkyl ester, a polyoxyethylene sorbitan alkyl ester, acetylene alcohol and acetylene glycol; a cationic surfactant such as an alkylamine salt and a quaternary ammonium salt; and an ampholytic surfactant such as an alkyl betaine and alkylamine oxide.

2.3 Method for Preparing Aqueous Coating Solution

The amount of the graft copolymer contained in the aqueous coating solution of the present invention is preferably in the range from 0.1% to 30% by weight and more preferably from 2% to 15% by weight based on the total weight of the aqueous coating solution.

The amount of the water-soluble organic solvent contained in the aqueous coating solution is preferably in the range from 3% to 50% by weight and more preferably from 5% to 40% by weight based on the total weight of the aqueous coating solution. In addition, the amount of water contained in the aqueous coating solution of the present invention is preferably in the range from 10% to 90% by weight and more preferably from 30% to 90% by weight.

Further, pH of the aqueous coating solution is preferably in the range from 5 to 10. When the aqueous coating solution has this pH, solubility of the aqueous coating agent containing the graft copolymer can be improved and storage stability can also be improved. In addition, members in an apparatus (for example, an ink-jet recording apparatus) to which the aqueous coating solution is applied can also be prevented from corroding.

In the case of regulating the pH of the aqueous coating solution, an inorganic alkali compound including an alkali metal hydroxide such as sodium hydroxide and potassium hydroxide; an organic amine such as dimethyl ethanolamine, diethanolamine and triethanolamine; an organic acid such as citric acid and tartaric acid; a mineral acid such as hydrochloric acid and phosphoric acid; and the like can be used as a pH adjuster.

From the viewpoint of ink ejection reliability, the viscosity of the aqueous coating solution at 25°C has desirably been reduced to 10 mPa·s or less, and more preferably to 5 mPa·s or less.

3. Aqueous Pigment Ink Compounded with Aqueous Coating Agent

3.1 Pigment

The pigment used in the aqueous pigment ink may be either an inorganic pigment or an organic pigment. The pigment may be used singly or in combination thereof depending on necessity.

The dispersion particle size of the pigment is preferably in the range from 0.005 to 15 $\mu$m, more preferably from 0.05 to 5 $\mu$m, and particularly from 0.01 to 1 $\mu$m. If the dispersion particle size is 0.005 $\mu$m or smaller, a dispersant is required in a larger amount to stabilize the dispersibility, and the pigment fails to demonstrate its performance. And if the particle size is 15 $\mu$m or larger, it becomes difficult to keep the dispersion state stable.

Examples of the inorganic pigment include carbon black, a metal oxide, a metal sulfide, a metal chloride and the like.

Carbon black includes furnace black, thermal lamp black, acetylene black, channel black and the like. Specific example thereof includes trade name "No.2300", "No.900", "MCF88" "No.33", "No.40", "No.45", "No.52", "MA7", "MA8" and "No. 2200B" manufactured by Mitsubishi Chemical Corp., trade name "RAVEN 1255" manufactured by Columbian Chemicals Company, trade name "REGAL 400R", "REGAL 330R", "REGAL 660R" and "MOGULL" manufactured by CABOT Corp., trade name "Color Black FW1", "Color Black FW18", "Color Black S160", "Color Black S170", "Color Black S150", "Color Black FW200", "Color Black FW2", "Color Black FW2V", "Printex 35", "Printex 75", "Printex L6" and "Printex U" manufactured by Evonik Degussa CO., Ltd., and the like.

Examples of the organic pigment include an azo pigment such as an azo lake, an insoluble azo pigment, a condensed azo pigment and a chelate azo pigment; a polycyclic pigment such as a phthalocyanine pigment, a perylene pigment, a perynone pigment, an anthraquinone pigment, a quinacridone pigment, a dioxazine pigment, a thioindigo pigment, an isoindolinone pigment and a quinofurarone pigment; a nitro pigment, a nitroso pigment, aniline black and the like.

Specifically, the organic pigment is selected suitably depending on the type (color) of the intended aqueous pigment ink by use of the aqueous coating agent of the present invention. Example thereof includes a yellow pigment such as C.I. Pigment Yellow 1, C.I. Pigment Yellow 2, C.I. Pigment Yellow 3, C.I. Pigment Yellow 13, C.I. Pigment Yellow 16, C.I. Pigment Yellow 74, C.I. Pigment Yellow 83 and C.I. Pigment Yellow 128; a magenta pigment such as C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 112 and C.I. Pigment Red 122; a cyan pigment such as C.I. Pigment Blue 1, C.I. Pigment Blue 2, C.I. Pigment Blue 3, C.I. Pigment Blue 15:3, C.I. Pigment Blue 16, C.I. Pigment Blue 22, C.I. Vat Blue 4 and C.I. Vat Blue 6; and the like.

Additionally, the pigment in black ink includes an organic pigment such as aniline black, besides inorganic pigments including above-mentioned carbon black such as C.I. Pigment Black 7, and an inorganic pigment such as iron oxide pigment.

When the aqueous coating agent of the present invention is used by being added to aqueous pigment ink, a pigment dispersant is desirably present in the aqueous pigment ink in order to stabilize the pigment separately from the coating agent. The pigment dispersant that can be used is not particularly limited. Specific examples include an anionic surfactant, a cationic surfactant, an amphoteric surfactant, a nonionic surfactant, a water-soluble polymer and the like. The pigment dispersant is particularly a water-soluble polymer, from the viewpoint of dispersion stability of the pigment.

Examples of the water-soluble polymer include polyacrylic acid, a (meth)acrylic acid-(meth)acrylate copolymer, a styrene-(meth)acrylate copolymer, a styrene-(meth)acrylic acid-(meth)acrylate copolymer, a styrene-maleic acid copolymer and salts thereof, and the like. In particular, a water-soluble polymer is preferably a copolymer of a monomer having a hydrophobic group with affinity for a pigment and a monomer having a hydrophilic group.

From the viewpoint of ink viscosity, the weight-average molecular weight of the water-soluble polymer is preferably in the range from 3,000 to 20,000. Additionally, the content thereof in ink is preferably in the range from 0.1% to 15% by weight.

### 3.2 Others

The aqueous pigment ink is compounded, besides the above-mentioned "1. Aqueous Coating Agent", with the above-mentioned pigment, the pigment dispersant, the above-mentioned "2.1 Aqueous Medium", and "2.2 Other Components", and a wide variety of known and customarily used additives that are usually used in an aqueous pigment ink. Their composition is the same as in the above-mentioned section "2".

### 3.3 Method of Preparing Aqueous Pigment Ink

In the case of an aqueous pigment ink compounded with the aqueous coating agent, the amount of a pigment dispersant contained in the ink is preferably in the range from 0.1% to 30% by weight and more preferably from 1% to 15% by weight based on the total weight of the ink. Additionally, the amount of a pigment contained in the aqueous ink is preferably in the range from 0.1% to 30% by weight and more preferably from 1% to 15% by weight.

The ratio of the pigment dispersion : pigment contained in the aqueous pigment ink is preferably in the range from 1:1 to 1:30 (weight ratio), and more preferably from 1:2 to 1:15.

The amount of the water-soluble organic solvent contained in the aqueous pigment ink is preferably in the range from 3% to 50% by weight and more preferably from 3% to 40% by weight based on the total weight of the ink. In addition, the amount of water contained in the aqueous pigment ink is preferably in the range from 10% to 90% by weight and more preferably from 30% to 80% by weight.

Further, pH of the aqueous pigment ink is preferably in the range from 5 to 10. When the aqueous coating solution has this pH, solubility of the above-mentioned coating agent and a pigment dispersant can be improved and storage stability can also be improved. In addition, members in an apparatus (for example, an ink-jet recording apparatus) to which the aqueous pigment ink is applied can also be prevented from corroding.

In the case of regulating the pH of the aqueous pigment ink, an inorganic alkali compound including an alkali metal hydroxide such as sodium hydroxide and potassium hydroxide; an organic amine such as dimethyl ethanolamine, diethanolamine and triethanolamine; an organic acid such as citric acid and tartaric acid; a mineral acid such as hydrochloric acid and phosphoric acid; and the like can be used as a pH adjuster.

When the aqueous coating agent is mixed with the above-mentioned components for the aqueous pigment ink and is subjected to dispersing, an aqueous pigment ink containing the aqueous coating agent can be obtained. The above components, to which a drying inhibitor or other additives may be added if necessary, can be diluted with an aqueous medium and used in an ink for ink-jet recording or in an aqueous pigment ink for writing utensils such as an aqueous ballpoint pen and a marker pen. In this case, a low-volatile or nonvolatile solvent out of the water-soluble organic solvents described above may be added to prevent an ink-jet nozzle or a pen tip from clogging due to drying. For improving permeation into a recording medium, a volatile solvent may be added. Particularly for use in an aqueous pigment ink for ink-jet recording, it is also preferable to add a surfactant in order to give the ink suitable surface tension.

### 4. Method of Using Aqueous Coating Agent or Aqueous Coating Solution

Hereinafter, a method of ink-jet recording with an aqueous pigment ink compounded with the above-mentioned aqueous coating agent or the aqueous coating solution is described.

The ink-jet recording system in which an aqueous pigment ink compounded with the aqueous coating agent or the aqueous coating solution is ejected is not particularly limited, and publicly known methods can be used. Particularly, because the aqueous coating agent is stable at high temperatures and because kogation hardly occurs, the aqueous coating solution or the aqueous coating agent is also preferable for a thermal ink-jet system said to be generally narrow in the scope of usable resins.

Although the recording medium is not particularly limited, application of the aqueous pigment ink compounded with the aqueous coating agent or the aqueous coating solution, to an ink-jet recording paper provided thereon with an ink-receiving layer is particularly useful.

Hereinafter, a recording method wherein the aqueous coating solution of the present invention is charged into a tank different from a tank for a pigment ink, and is ejected from a nozzle different from a nozzle for the pigment ink is described in detail.

In application by the ink-jet system, it is necessary that after ejection of a pigment ink, the aqueous coating solution be ejected, where it is desired that a process of ink-jet recording with the pigment ink, and a process for forming a coating film on the surface with the aqueous coating solution, be completed by loading one ink-jet printer only once (1 pass) with a recording medium.

The application of the aqueous coating solution of the present invention is not particularly limited, and the aqueous coating solution can be applied onto only portions where a pigment ink is present, or onto the whole surface regardless of whether pigment ink is present or not.

[EXAMPLES]

The present invention is described in more detail by reference to Examples and Comparative Examples. The terms "%" and "parts" in each example refer to "% by weight" and "parts by weight", respectively. Tg is calculated as a value of a copolymer consisting of a main chain excluding a silicone side chain or as a value of a linear copolymer using the equation (1) above.

Example 1

<Synthesis of Copolymer>

25 grams of methyl methacrylate, 35 grams of butyl methacrylate, 15 grams of methacrylic acid, 25 grams of polydimethyl siloxane modified at one end with methacryloyl, having a weight-average molecular weight of 5,000 (silicone macromonomer A), 200 grams of isopropyl alcohol and 3.5 grams of azobis-2-methylobutylnitrile (ABN-E) were charged into a glass flask equipped with a stirrer, a dropping funnel, a reflux condenser, a nitrogen gas inlet tube and a thermometer, and then polymerized at 80°C for 7 hours, to produce an isopropyl alcohol solution (solid content: 30%) containing copolymer. Subsequently, the isopropyl alcohol solution containing copolymer was neutralized with ion exchanged water and potassium hydroxide equivalent to the carboxyl group of the copolymer. After that, the isopropyl alcohol was then distilled away under reduced pressure for solvent removal, whereby an aqueous solution (solid content: 25%) of copolymer E1 (Mw: 12,000, acid value: 100 mg-KOH/g, Tg: 65°C) was obtained.

<Preparation of Aqueous Coating Solution>

20 parts of the aqueous solution of the above-mentioned copolymer E1 (solid content 25%), 5 parts of glycerol, 15 parts of diethylene glycol, 2 parts of 2-pyrrolidone and 58 parts of an ion exchanged water were mixed, adjusted to pH in the range from 8 to 10 with diethylethanolamine, and filtered through a membrane filter having a pore size of 5.0 $\mu$m, to obtain a target aqueous coating solution E1.

Example 2

An aqueous solution of copolymer E2 (Mw: 13,000, acid value: 150 mg-KOH/g, Tg: 65°C) was obtained in the same manner as in Example 1 except that 14 grams of methyl methacrylate, 38 grams of butyl methacrylate, 23 grams of methacrylic acid and 25 grams of silicone macromonomer A were used instead of the monomers used in synthesis for the copolymer in Example 1. Thereafter, an aqueous coating solution E2 was obtained in the same manner as in Example 1.

Example 3

An aqueous solution of copolymer E3 (Mw: 22,000, acid value: 100 mg-KOH/g, Tg: 65°C) was obtained in the same manner as in Example 1 except that the using amount of azobis-2-methylobutylnitrile (ABN-E) was changed to 2.0 grams, while the same monomer composition as used in synthesis of the copolymer in Example 1 was used. Thereafter, an aqueous coating solution E3 was obtained in the same manner as in Example 1.

Example 4

An aqueous solution of copolymer E4 (Mw: 22,000, acid value: 50 mg-KOH/g, Tg: 65°C) was obtained in the same manner as in Example 1 except that 34 grams of methyl methacrylate, 33 grams of butyl methacrylate, 8 grams of methacrylic acid and 25 grams of silicone macromonomer A were used instead of the monomers used in synthesis for the copolymer in Example 1 and the using amount of azobis-2-methylobutylnitrile (ABN-E) was changed to 2.0 grams. Thereafter, an aqueous coating solution E4 was obtained in the same manner as in Example 1.

Example 5

An aqueous solution of copolymer E5 (Mw: 13,000, acid value: 100 mg-KOH/g, hydroxyl value: 17 mg-KOH/g, Tg: 65°C) was obtained in the same manner as in Example 1 except that 23 grams of methyl methacrylate, 33 grams of butyl methacrylate, 15 grams of methacrylic acid, 4 grams of 2-hydroxyethyl methacrylate and 25 grams of silicone macromonomer A were used instead of the monomers used in synthesis for the copolymer in Example 1. Thereafter, an aqueous coating solution E5 was obtained in the same manner as in Example 1.

Example 6

An aqueous solution of copolymer E6 (Mw: 15,000, acid value: 100 mg-KOH/g, Tg: 65°C) was obtained in the same manner as in Example 1 except that 25 grams of methyl methacrylate, 35 grams of butyl methacrylate, 15 grams of methacrylic acid and 25 grams of polydimethyl siloxane modified at one end with methacryloyl, having a weight-average molecular weight of 12,000 (silicone macromonomer B) were used instead of the monomers used in synthesis for the copolymer in Example 1. Thereafter, an aqueous coating solution E6 was obtained in the same manner as in Example 1.

Example 7

An aqueous solution of copolymer E7 (Mw: 13,000, acid value: 100 mg-KOH/g, Tg: 65°C) was obtained in the same manner as in Example 1 except that 10 grams of methyl methacrylate, 25 grams of butyl methacrylate, 15 grams of methacrylic acid and 50 grams of silicone macromonomer A were used instead of the monomers used in synthesis for the copolymer in Example 1. Thereafter, an aqueous coating solution E7 was obtained in the same manner as in Example 1.

Example 8

An aqueous solution of copolymer E8 (Mw: 12,000, acid value: 100 mg-KOH/g, Tg: 38°C) was obtained in the same manner as in Example 1 except that 60 grams of butyl methacrylate, 15 grams of methacrylic acid and 25 grams of silicone macromonomer A were used instead of the monomers used in synthesis for the copolymer in Example 1. Thereafter, an aqueous coating solution E8 was obtained in the same manner as in Example 1.

Example 9

An aqueous solution of copolymer E9 (Mw: 12,000, acid value: 100 mg-KOH/g, Tg: 100°C) was obtained in the same manner as in Example 1 except that 52 grams of methyl methacrylate, 8 grams of butyl methacrylate, 15 grams of methacrylic acid and 25 grams of silicone macromonomer A were used instead of the monomers used in synthesis for the copolymer in Example 1. Thereafter, an aqueous coating solution E9 was obtained in the same manner as in Example 1.

Comparative Example 1

An aqueous solution of copolymer C1 (Mw: 13,000, acid value: 100 mg-KOH/g, Tg: 65°C) was obtained in the same manner as in Example 1 except that 40 grams of methyl methacrylate, 45 grams of butyl methacrylate and 15 grams of methacrylic acid were used instead of the monomers used in synthesis for the copolymer in Example 1. Thereafter, an aqueous coating solution C1 was obtained in the same manner as in Example 1.

Comparative Example 2

An aqueous solution of copolymer C2 (Mw: 14,000, acid value: 220 mg-KOH/g, Tg: 65°C) was obtained in the same manner as in Example 1 except that 41 grams of butyl methacrylate, 34 grams of methacrylic acid and 25 grams of silicone macromonomer A were used instead of the monomers used in synthesis for the copolymer in Example 1. Thereafter, an aqueous coating solution C2 was obtained in the same manner as in Example 1.

Comparative Example 3

An aqueous solution of copolymer C3 (Mw: 13,000, acid value: 33 mg-KOH/g, Tg: 65°C) was obtained in the same manner as in Example 1 except that 38 grams of methyl methacrylate, 32 grams of butyl methacrylate, 5 grams of methacrylic acid and 25 grams of silicone macromonomer A were used instead of the monomers used in synthesis for the copolymer in Example 1. Thereafter, an aqueous coating solution C3 was obtained in the same manner as in Example 1.

Comparative Example 4

An aqueous solution of copolymer C4 (Mw: 35,000, acid value: 100 mg-KOH/g, Tg: 65°C) was obtained in the same manner as in Example 1 except that the using amount of azobis-2-methylobutylnitrile (ABN-E) was changed to 1.2 grams, while the same monomer composition as used in synthesis of the copolymer in Example 1 was used. Thereafter, an aqueous coating solution C4 was obtained in the same manner as in Example 1.

Comparative Example 5

An aqueous solution of copolymer C5 (Mw: 13,000, acid value: 220 mg-KOH/g, Tg: 65°C) was obtained in the same manner as in Example 1 except that 14 grams of methyl methacrylate, 52 grams of butyl methacrylate and 34 grams of methacrylic acid were used instead of the monomers used in synthesis for the copolymer in Example 1. Thereafter, an aqueous coating solution C5 was obtained in the same manner as in Example 1.

Comparative Example 6

An aqueous solution of copolymer C6 (Mw: 42,000, acid value: 100 mg-KOH/g, Tg: 65°C) was obtained in the same manner as in Example 1 except that 40 grams of methyl methacrylate, 45 grams of butyl methacrylate and 15 grams of methacrylic acid were used instead of the monomers used in synthesis for the copolymer in Example 1 and the using amount of azobis-2-methylobutylnitrile (ABN-E) was changed to 1.0 grams. Thereafter, an aqueous coating solution C6 was obtained in the same manner as in Example 1.

Comparative Example 7

An aqueous solution of copolymer C7 (Mw: 14,000, acid value: 100 mg-KOH/g, hydroxyl value: 43 mg-KOH/g, Tg: 65°C) was obtained in the same manner as in Example 1 except that 35 grams of methyl methacrylate, 40 grams of butyl methacrylate, 15 grams of methacrylic acid and 10 grams of 2-hydroxyethyl methacrylate were used instead of the monomers used in synthesis for the copolymer in Example 1. Thereafter, an aqueous coating solution C7 was obtained in the same manner as in Example 1.

Comparative Example 8

An aqueous solution of copolymer C8 (Mw: 12,000, acid value: 100 mg-KOH/g, hydroxyl value: 35 mg-KOH/g, Tg: 65°C) was obtained in the same manner as in Example 1 except that 21 grams of methyl methacrylate, 31 grams of butyl methacrylate, 15 grams of methacrylic acid, 8 grams of 2-hydroxyethyl methacrylate and 25 grams of silicone macromonomer A were used instead of the monomers used in synthesis for the copolymer in Example 1. Thereafter, an aqueous coating solution C8 was obtained in the same manner as in Example 1.

(Evaluation)

The aqueous coating solutions E1 to E9 and C1 to C8, obtained in Examples 1 to 9 and Comparative Examples 1 to 8, were subjected to evaluation for the following items a) to c). The results are shown in Tables 1 and 2.

<Preparation of Recorded Material>

Ink cartridges of Microbubble Jet Printer "PIXUS iP4200" (trade name) manufactured by Canon Inc. were charged with the aqueous coating solution and pigment ink, and were used in printing commercial glossy paper (Photo Glossy Paper "GP-301" (trade name) manufactured by Canon Inc.) with black pigment ink, followed by coating the paper with the aqueous coating solution in the ink-jet system.
Microbubble Jet Printer is a registered trademark of Canon Inc.

[a] Scratch Resistance

The recorded material obtained by the operation described above was dried at room temperature for 24 hours, and then the printed portion was rubbed strongly with fingers. The change caused by rubbing was evaluated under the following criteria:

○: Peeling of the print was hardly recognized.
△: Peeling of the print was recognized to a certain extent.
✕: Peeling of the print was clearly recognized.

[b] Water Resistance

Water, or a solution A consisting of water : glycerol : diethylene glycol : 2-pyrrolidone = 78 : 5 : 15 : 2, was spotted onto the recorded material, and was left for 3 minutes. After that ink bleed was evaluated under the following criteria:

◎: Ink bleed was observed with neither water nor the solution A.
○: Ink bleed was not observed with water but slightly observed with the solution A.
△: Ink bleed was observed to a certain extent with both water and the solution A.
✕: Ink bleed was clearly observed with both water and the solution A.

[c] Gloss

An image printed with pigment ink not using the aqueous coating solution was used as a control, and the gloss of the recorded material was evaluated visually under the following criteria:

○: As compared with the control, clear gloss improvement was recognized.
△: As compared with the control, gloss improvement was recognized to a certain extent.
✕: As compared with the control, gloss improvement was not recognized, or gloss was deteriorated.

[d] Ejectability

Using the printer described above, 10 sheets of glossy paper were subjected successively to solid printing with the aqueous coating solution, and the weight of ink which had been ejected (adhered) onto each paper was measured, and simultaneously fading of the print was checked, to evaluate ejectability under the following criteria:

◎: Fluctuation in the weight of ejected ink and fading of the print were not recognized.
○: Fluctuation in the weight of ejected ink and fading of the print were slightly recognized.
△: Fluctuation in the weight of ejected ink and fading of the print were recognized to a certain extent.
✕: Fluctuation in the weight of ejected ink and fading of the print were clearly recognized.

Table 1

Table 1

| | Example 1 | Example 2 | Example 3 | Example 4 | Example 5 | Example 6 | Example 7 | Example 8 | Example 9 |
|---|---|---|---|---|---|---|---|---|---|
| Copolymer | (E1) | (E2) | (E3) | (E4) | (E5) | (E6) | (E7) | (E8) | (E9) |
| Silicone macromonomer A | 25 | 25 | 25 | 25 | 25 | | 50 | 25 | 25 |
| Silicone macromonomer B | | | | | | 25 | | | |
| MMA | 25 | 14 | 25 | 34 | 23 | 25 | 10 | | 52 |
| BMA | 35 | 38 | 35 | 33 | 33 | 35 | 25 | 60 | 8 |
| MAA | 15 | 23 | 15 | 8 | 15 | 15 | 15 | 15 | 15 |
| HEMA | | | | | 4 | | | | |
| Weight-average molecular weight | 12,000 | 13,000 | 22,000 | 22,000 | 13,000 | 15,000 | 13,000 | 12,000 | 12,000 |
| Tg [°C] | 65 | 65 | 65 | 65 | 65 | 65 | 65 | 38 | 100 |
| Acid value [mg-KOH/g] | 100 | 150 | 100 | 50 | 100 | 100 | 100 | 100 | 100 |
| Hydroxyl value [mg-KOH/g] | 0 | 0 | 0 | 0 | 17 | 0 | 0 | 0 | 0 |
| Scratch resistance | ○ | ○ | ○ | ○ | ○ | ○ | △ | △ | △ |
| Water resistance | ◎ | ○ | ○ | ○ | △ | ◎ | ○ | △ | ○ |
| Gloss | ○ | ○ | ○ | ○ | ○ | ○ | ○ | ○ | △ |
| Ejectability | ◎ | ◎ | ○ | △ | △ | ○ | △ | ○ | ○ |

Abbreviations in the table are as follows:

MMA; methyl methacrylate, BMA; butyl methacrylate, AA; acrylic acid, MAA; methacrylic acid, HEMA; 2-hydroxyethyl methacrylate.

Table 2

Table 2

| Copolymer | Comparative Example 1 (C1) | Comparative Example 2 (C2) | Comparative Example 3 (C3) | Comparative Example 4 (C4) | Comparative Example 5 (C5) | Comparative Example 6 (C6) | Comparative Example 7 (C7) | Comparative Example 8 (C8) |
|---|---|---|---|---|---|---|---|---|
| Silicone macromonomer A | | 25 | 25 | 25 | | | | 25 |
| Silicone macromonomer B | | | | | | | | |
| MMA | 40 | | 38 | 25 | 14 | 40 | 35 | 21 |
| BMA | 45 | 41 | 32 | 35 | 52 | 45 | 40 | 31 |
| MAA | 15 | 34 | 5 | 15 | 34 | 15 | 15 | 15 |
| HEMA | | | | | | | 10 | 8 |
| Weight-average molecular weight | 13,000 | 14,000 | 13,000 | 35,000 | 13,000 | 42,000 | 14,000 | 12,000 |
| Tg [°C] | 65 | 65 | 65 | 65 | 65 | 65 | 65 | 65 |
| Acid value [mg-KOH/g] | 100 | 220 | 33 | 100 | 220 | 100 | 100 | 100 |
| Hydroxyl value [mg-KOH/g] | 0 | 0 | 0 | 0 | 0 | 0 | 43 | 35 |
| Scratch resistance | × | ○ | ○ | ○ | × | × | × | ○ |
| Water resistance | ○ | × | ◎ | ◎ | × | △ | × | △ |
| Gloss | ○ | △ | △ | ○ | △ | △ | △ | ○ |
| Ejectability | ○ | ○ | × | × | ○ | × | × | × |

As shown in Tables 1 and 2, the aqueous coating solutions in Examples indicated good results as compared with the aqueous coating solutions in Comparative Examples. That is, they had good ink ejectability and could form a film excellent in scratch resistance, water resistance and gloss.

[INDUSTRIAL APPLICABILITY]

The aqueous coating agent comprising the graft copolymer of the present invention forms a film excellent in scratch resistance, water resistance and gloss on the surface of an ink-jet recorded material. It is also excellent in ink ejectability, and is thus extremely useful as a coating agent to be applied by the ink-jet system onto the surface of a recorded material. The coating solution of the present invention can also be used separately from a pigment ink in the ink-jet system to give printed materials excellent in scratch resistance, water resistance and gloss. In particular, it is useful for application where vivid images such as in outdoor posters are required over a long period of time.

**Claims**

1. An aqueous coating agent for pigment ink-jet, which is applied onto a recording medium by an ink-jet system, **characterized by** comprising a graft copolymer that has a silicone-based side chain, and a main chain consisting of constituents from an ethylenically unsaturated carboxylic acid-containing monomer and at least one of an alkyl (meth)acrylate and a hydroxyalkyl (meth)acrylate,
   wherein said alkyl (meth)acrylate is at least one selected from the group consisting of methyl (meth)acrylate, ethyl (meth)acrylate, propyl (meth)acrylate, butyl (meth) acrylate and 2-ethylhexyl (meth)acrylate, wherein said graft copolymer has an acid value in the range from 40 to 200 mg-KOH/g (solid)
   wherein said constituent from said ethylenically unsaturated carboxylic acid-containing monomer in said graft copolymer is partially or wholly neutralized,
   wherein said graft copolymer has a weight-average molecular weight in the range from 5,000 to 30,000 determined by gel permeation chromatography with polystyrene as standard substance, and
   wherein the glass transition temperature of said main chain is in the range from 50°C to 80°C.

2. The aqueous coating agent for pigment ink-jet according to Claim 1, wherein a hydroxyl value of said graft copolymer is 30 mg-KOH/g or less.

3. The aqueous coating agent for pigment ink-jet according to Claim 1 or 2, wherein a weight-average molecular weight of said silicone-based chain of said graft copolymer is in the range from 3,000 to 20,000 determined by gel permeation chromatography with polystyrene as standard substance.

4. The aqueous coating agent for pigment ink-jet according to any one of Claims 1 to 3, wherein said ink-jet system is a thermal ink-jet system.

5. An ink jet recording method, **characterized in that** said method comprises a step for coating an aqueous coating solution for pigment ink-jet comprising said aqueous coating agent according to any one of Claims 1 to 4, said aqueous coating solution is charged into a tank different from a tank for pigment ink, and is ejected and applied onto a recorded material from a nozzle different from a nozzle for pigment ink in an ink-jet system.

6. Use of an aqueous coating solution for pigment ink-jet for forming a coating film on the surface of a recorded material by an ink-jet system, **characterized in that** said aqueous coating solution for pigment ink-jet comprises an aqueous medium and said aqueous coating agent for pigment ink-jet according to any one of Claims 1 to 4.

7. The use of an aqueous coating solution for pigment ink-jet according to Claim 6, wherein said aqueous coating solution for pigment ink-jet is charged into a tank different from a tank for pigment ink, and is ejected and applied onto a recorded material from a nozzle different from a nozzle for pigment ink.

8. The use of an aqueous coating solution for pigment ink-jet according to Claims 6 or 7, wherein said ink-jet system is a thermal ink-jet system.

## Patentansprüche

1. Wässriges Beschichtungsmittel für Pigmenttintenstrahl, welches durch ein Tintenstrahlsystem auf ein Aufzeichnungsmedium aufgebracht wird, **gekennzeichnet durch** Umfassen eines Pfropfcopolymers, das eine Silikon-basierte Seitenkette und eine Hauptkette bestehend aus Bestandteilen von einem ethylenisch ungesättigten Carbonsäure-enthaltenden Monomer und zumindest einem von einem Alkyl(meth)acrylat und einem Hydroxyalkyl(meth)acrylat aufweist,

   wobei das Alkyl(meth)acrylat zumindest eines ist ausgewählt aus der Gruppe bestehend aus Methyl(meth)acrylat, Ethyl(meth)acrylat, Propyl(meth)acrylat, Butyl(meth)acrylat und 2-Ethylhexyl(meth)acrylat,

   wobei das Pfropfcopolymer einen Säurewert in dem Bereich von 40 bis 200 mg-KOH/g (Festkörper) aufweist,

   wobei der Bestandteil von dem ethylenisch ungesättigten Carbonsäure-enthaltenden Monomer in dem Pfropfcopolymer teilweise oder ganz neutralisiert ist,

   wobei das Pfropfcopolymer ein gewichtsgemitteltes Molekulargewicht, bestimmt **durch** Gelpermeationschromatographie mit Polystyrol als Standardsubstanz, in dem Bereich von 5000 bis 30000 aufweist, und

   wobei die Glasübergangstemperatur der Hauptkette in dem Bereich von 50°C bis 80°C ist.

2. Wässriges Beschichtungsmittel für Pigmenttintenstrahl nach Anspruch 1, wobei ein Hydroxylwert des Pfropfcopolymers 30 mg-KOH/g oder weniger ist.

3. Wässriges Beschichtungsmittel für Pigmenttintenstrahl nach Anspruch 1 oder 2, wobei ein gewichtsgemitteltes Molekulargewicht, bestimmt durch Gelpermeationschromatographie mit Polystyrol als Standardsubstanz, von der Silikon-basierten Kette des Pfropfcopolymers in dem Bereich von 3000 bis 20000 ist.

4. Wässriges Beschichtungsmittel für Pigmenttintenstrahl nach einem der Ansprüche 1 bis 3, wobei das Tintenstrahlsystem ein thermisches Tintenstrahlsystem ist.

5. Tintenstrahlaufzeichnungsverfahren, **dadurch gekennzeichnet, dass** das Verfahren einen Schritt zum Beschichten einer wässrigen Beschichtungslösung für Pigmenttintenstrahl umfasst, die das wässrige Beschichtungsmittel nach einem der Ansprüche 1 bis 4 umfasst, wobei die wässrige Beschichtungslösung in einen Tank gefüllt wird, der sich von einem Tank für Pigmenttinte unterscheidet, und in einem Tintenstrahlsystem von einer Düse ausgestoßen und auf ein aufgezeichnetes Material aufgebracht wird, die sich von einer Düse für Pigmenttinte unterscheidet.

6. Verwendung einer wässrigen Beschichtungslösung für Pigmenttintenstrahl zum Bilden eines Beschichtungsfilms auf der Oberfläche eines aufgezeichnetes Materials durch ein Tintenstrahlsystem, **dadurch gekennzeichnet, dass** die wässrige Beschichtungslösung für Pigmenttintenstrahl ein wässriges Medium und das wässrige Beschichtungsmittel für Pigmenttintenstrahl nach einem der Ansprüche 1 bis 4 umfasst.

7. Verwendung einer wässrigen Beschichtungslösung für Pigmenttintenstrahl nach Anspruch 6, wobei die wässrige Beschichtungslösung für Pigmenttintenstrahl in einen Tank gefüllt wird, der sich von einem Tank für Pigmenttinte unterscheidet, und von einer Düse ausgestoßen und auf ein aufgezeichnetes Material aufgebracht wird, die sich von einer Düse für Pigmenttinte unterscheidet.

8. Verwendung einer wässrigen Beschichtungslösung für Pigmenttintenstrahl nach Anspruch 6 oder 7, wobei das Tintenstrahlsystem ein thermisches Tintenstrahlsystem ist.

## Revendications

1. Agent de revêtement aqueux pour un jet d'encre à base de pigment, qui est appliqué sur un support d'enregistrement par un système à jet d'encre, **caractérisé en ce qu'**il comprend un copolymère greffé qui a une chaîne latérale à base de silicone, et une chaîne principale constituée de constituants obtenus à partir d'un monomère contenant un acide carboxylique à insaturation éthylénique et d'au moins l'un d'un (méth)acrylate d'alkyle et d'un (méth)acrylate d'hydroxyalkyle,

   dans lequel ledit (méth)acrylate d'alkyle est au moins un élément choisi dans le groupe constitué de (méth)acrylate de méthyle, (méth)acrylate d'éthyle, (méth)acrylate de propyle, (méth)acrylate de butyle et de (méth)acrylate de 2-éthylhexyle,

   dans lequel ledit copolymère greffé a un indice d'acide dans la plage allant de 40 à 200 mg KOH/g (solide),

   dans lequel ledit constituant obtenu à partir dudit monomère contenant un acide carboxylique à insaturation éthylénique dans ledit copolymère greffé est partiellement ou totalement neutralisé,
dans lequel ledit copolymère greffé a un poids moléculaire moyen en poids dans la plage allant de 5000 à 30000 déterminé par chromatographie par perméation de gel avec le polystyrène comme substance de référence, et dans lequel la température de transition vitreuse de ladite chaîne principale est dans la plage allant de 50°C à 80°C.

2. Agent de revêtement aqueux pour un jet d'encre à base de pigment selon la revendication 1, dans lequel un indice d'hydroxyle dudit copolymère greffé est inférieur ou égal à 30 mg KOH/g.

3. Agent de revêtement aqueux pour un jet d'encre à base de pigment selon la revendication 1 ou 2, dans lequel un poids moléculaire moyen en poids de ladite chaîne à base de silicone dudit copolymère greffé est dans la plage allant de 3000 à 20000 déterminé par chromatographie par perméation de gel avec le polystyrène comme substance de référence.

4. Agent de revêtement aqueux pour un jet d'encre à base de pigment selon l'une quelconque des revendications 1 à 3, dans lequel ledit système à jet d'encre est un système à jet d'encre thermique.

5. Procédé d'enregistrement à jet d'encre, **caractérisé en ce que** ledit procédé comprend une étape de revêtement d'une solution de revêtement aqueuse pour un jet d'encre à base de pigment comprenant ledit agent de revêtement aqueux selon l'une quelconque des revendications 1 à 4, ladite solution de revêtement aqueuse est chargée dans un réservoir différent d'un réservoir pour une encre à base de pigment, et est éjectée et appliquée sur un matériau enregistré à partir d'une buse différente d'une buse pour une encre à base de pigment dans un système à jet d'encre.

6. Utilisation d'une solution de revêtement aqueuse pour un jet d'encre à base de pigment pour former un film de revêtement sur la surface d'un matériau enregistré par un système à jet d'encre, **caractérisée en ce que** ladite solution de revêtement aqueuse pour un jet d'encre à base de pigment comprend un milieu aqueux et ledit agent de revêtement aqueux pour un jet d'encre à base de pigment selon l'une quelconque des revendications 1 à 4.

7. Utilisation d'une solution de revêtement aqueuse pour un jet d'encre à base de pigment selon la revendication 6, dans laquelle ladite solution de revêtement aqueuse pour un jet d'encre à base de pigment est chargée dans un réservoir différent d'un réservoir pour une encre à base de pigment, et est éjectée et appliquée sur un matériau enregistré à partir d'une buse différente d'une buse pour une encre à base de pigment.

8. Utilisation d'une solution de revêtement aqueuse pour un jet d'encre à base de pigment selon la revendication 6 ou 7, dans laquelle ledit système à jet d'encre est un système à jet d'encre thermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H970960 A
- JP H948180 A
- JP H9262971 A
- JP 2001039006 A
- JP 2004050751 A
- JP 2000506198 A
- JP S5978236 A
- JP S60123518 A